# EUROPEAN PATENT APPLICATION

(11) **EP 2 133 388 A2**
(43) Date of publication of application: **16.12.2009**
(21) Application number: 09162591.3
(22) Date of filing: 12.06.2009
(51) Int. Cl.: C08K 5/00, C08K 5/3492

(54) **Metal-hydrate containing arc-extinguishing compositions and methods**

(30) Priority: 12.06.2008 US 137765
(71) Applicant: S & C Electric Company, Chicago, IL 60626-3904 (US)
(72) Inventor: Moore, Jeffrey A., Lake Zurich 60047 Illinois (US); Benson IV, Keith W., Chicago 60614 (US)
(74) Representative: Witte, Weller & Partner

(57) **Abstract**

An arc extinguishing composition includes an arc-quenching metal hydrate (herein defined as a metal compound that produces water vapor (H₂O) when in contact with an electrical arc), and one or more binders. The compositions contain an arc-quenching metal hydrate compound, such as Mg(OH)₂, with or without a second arc-quenching compound, such as melamine, and these metal hydrate-containing compositions are used in a method of extinguishing an arc by disposing the molded compositions along a path of an electrical arc, for contacting the arc.

## Description

The present invention relates to arc-quenching materials and articles fabricated therefrom for high-voltage electrical devices and equipment such as circuit interrupters wherein, under certain conditions of operation, a high-voltage electrical arc is produced that is either desirably, or by necessity, quenched. More particularly, the present invention relates to compositions and methods of extinguishing electronics to achieve improved arc-quenching and improved structural properties in devices such as circuit interrupters, high-voltage fuses, circuit breakers, and separable cable connectors.

To provide effective circuit interruption in circuit interrupters, fuses, and the like, it is desirable to utilize an arc-quenching material or composition to quench and suppress arcing during electrical contact separation or fuse operation. Of necessity, the arc-quenching materials should include characteristics and properties sufficient for the particular application so as to be effective in quenching arcs via the rapid evolution of quenching gases. Of course, the evolved quenching gases should also be relatively nonconductive. In addition, it is also important that the arc-quenching materials are capable of being molded or otherwise fabricated into suitable articles and shapes having desirable structural properties, thermal stability, and environmental resistance to thermal cycling.

In many circuit-interrupting devices, it is typical to utilize a trailer/liner configuration, as well known in the art, so that the arc is drawn into an annular space defined between the trailer and the liner, each of which is preferably fabricated from an arc-quenching composition. The action of the gases produced by the trailer and/or liner on the confined arc tends to deionize the arc and force its extinction. Examples of trailer/liner configurations are shown in the following U.S. Pat. Nos.: 2,351,826; 2,816,980; 2,816,978; 2,816,985; 4,103,129; and 3,909,570 and in Descriptive Bulletin 811-30 of S&C Electric Company, Chicago, Ill. Similarly, in high-voltage fuses, which also can be characterized as circuit interrupters, a sleeve or liner surrounds the path of the arc during fuse operation with the sleeve or liner being fabricated from an arc-extinguishing material. Reference may be made to U.S. Pat. Nos. 3,629,767, 4,307,369 and 5,070,145, and published application 2006/0006144 A1, all incorporated herein by reference, for examples of fuses of this type surrounded by arc-extinguishing materials, sleeves or liners.

Typical arc-quenching materials and their properties are disclosed in the following U.S. Pat. Nos.: 3,582,586; 3,761,669; 4,251,699; and 4,444,671. One composition in U.S. Pat. No. 3,582,586 includes melamine and polyethylene. While this composition is generally suitable for various applications and exhibits desirable arc-quenching properties, for many applications, it would be desirable to achieve a composition with improved mechanical characteristics and environmental resistance to thermal cycling while maintaining the desirable arc-quenching characteristics.

One of the most effective arc-quenching compounds used in this art for arc-quenching is melamine (C₃N₆H₆) which is a white crystalline powder having a melting point of about 350° F and sublimes at its melting temperatures and below. Other, related nitrogen-containing compounds are also recognized in the prior art as arc-quenching or arc-interrupting compounds and are disclosed in Amundson et al U.S. Pat. No. 2,526,448. Melamine and its related compounds have excellent arc-interrupting characteristics but suffer from extreme structural weakness, so that they cannot be molded or pressed into satisfactory structural shapes except in combination with a suitable binder.

For a binder to be most effective in an arc-quenching or arc-interrupting composition it should volatilize or decompose in the presence of an electric arc, as does melamine. The binder, however, does not necessarily have to provide any arc-interrupting or arc-extinguishing characteristics to the composition, since, in some cases, the arc-interrupting characteristics of the melamine included in the composition is sufficient for arc-interrupting purposes. The binder, therefore, is primarily included for purposes of providing the melamine-containing composition with sufficient moldability and to provide a molded structure of sufficient physical strength, physical and chemical stability, and electrical insulating properties to provide a structurally sound, molded product. The physical strength of the molded product is most evident in its tensile strength, its percent elongation, and the amount of energy required to break the molded structure, or impact strength.

Structural damage, i.e., cracks have been found in prior art devices containing polyethylene as its primary binder material, and such damage is unacceptable in this art, since the break point allows another air space for the gases and arc to fill, thereby significantly lessening the arc-interrupting properties of the arc-interrupting device. Further, failed arc extinguishing compositions that contain melamine usually fail because the pressure wave associated with the arc causes the composition to physically break before it has an opportunity to extinguish the arc. The arc-extinguishing compositions described herein extinguish the arc without physically breaking. Thermoplastic polymeric binders have been found to be the most useful in arc-interrupting compositions based upon melamine or similar compounds, since the thermoplastic binders volatilize or decompose in the presence of an electric arc at lower power conditions than necessary to sublime melamine thereby producing large volumes of gas to drive the melamine into the core of the arc and to extinguish the arc under a wide range of power conditions. Further, the thermoplastic binders provide compositions with good molding characteristics, stability and electrical insulating properties.

Typical thermoplastic polymeric resins known to be useful as binders in melamine-based arc-interrupting compositions include polyethylene, polypropylene, polytetrafluoroethylene, acrylics, polystyrene, cellulosics, polyamides (nylons), polyacetals (DELRIN), polyphenylene oxides, blends such as ABS, high temperature nylons, such as DuPont Zytel® HTN nylons, which are PPA (polyphthalamide) resins, and polyimides. Other binders, such as thermosetting resins, epoxy resins, polyester resins, phenolic resins, and the like, also are known to be useful as binders in arc-interrupting compositions. It is also known to include elastomeric, rubber-like materials as a portion of the binder in melamine-based arc-interrupting compositions such as butyl compounds, isoprene-based compounds, neoprene-based compounds and other synthetic elastomers.

In this assignee's U.S. Patent No. 4,975,551, there is disclosed a binder comprising a carboxylic acid group-containing polymer, particularly a copolymer of two different monomers, at least one of which contains a carboxylic acid moiety, such as an ethylene acrylic acid copolymer. As disclosed, the carboxylic acid functionalities of the binder interact with arc-extinguishing compounds having carboxylic acid-active sites, such as amine, thiol, alcohol, halogen, and the like sites, to provide added physical strength and stability to the composition. The molded composition, including the arc-interrupting compound and the binder, maintains excellent arc-interrupting capability, chemical stability and electrical insulating properties as well as increased physical strength.

In the assignee's published application 2006/0006144 Al the arc-extinguishing composition includes an arc-quenching compound, such as melamine, a binder, such as a polyamide, e.g., nylon, and a coupling agent that ties the arc-extinguishing compound to the binder.

In brief, the present invention is directed to new and improved arc extinguishing compositions including an arc-quenching metal hydrate (herein defined as a metal compound that produces water vapor (H₂O) when in contact with an electrical arc), and one or more binders. The compositions contain an arc-quenching metal hydrate compound, such as Mg(OH)₂, with or without a second arc-quenching compound, such as melamine, and these metal hydrate-containing compositions are used in a method of extinguishing an arc by disposing the molded compositions along a path of an electrical arc, for contacting the arc.

In one embodiment the invention relates to an arc-extinguishing composition comprising an effective amount of an arc-quenching metal hydrate; a polymeric binder for the arc-quenching metal hydrate; and a compatible plasticizer for the polymeric binder.

In an embodiment the composition further comprises a coupling agent that binds the arc-quenching metal hydrate to the polymeric binder.

In an embodiment the metal hydrate is magnesium hydroxide.

In an embodiment the polymeric binder includes a functionality selected from the group consisting of anhydride, hydroxyl, carbonyl, carboxyl, amine, amide, ether, lactam, lactone, epoxy, ester, sulfate, sulfonate, sulfinate, sulfamate, phosphate, phosphonate, phosphinate, and combinations thereof.

In an embodiment the polymeric binder includes a functionality selected from the group consisting of anhydride, carbonyl, carboxyl, hydroxyl, amine, amide, ether, ester, and combinations thereof.

In an embodiment the binder comprises a polyamide selected from the group consisting of nylon 4/6, nylon 6, nylon 6/6, nylon 11, nylon 6/12, and polyphthalamide.

In an embodiment the composition further includes a second arc-quenching compound.

In an embodiment the second arc-quenching compound is selected from the group consisting of melamine, guanidine, guanidine acetate, guanidine carbonate, 1,3 diphenylguanidine, a cyanurate, a melamine cyanurate, hydantoin, allantoin, urea, urea phosphate, benzoguanidine, dithioammelide, ammeline, a cyanuric halide, and combinations thereof.

In an embodiment the second arc-quenching compound is melamine and the melamine has a particle size such that at least 90% by weight of the melamine particles have a size less than 200 µm

In an embodiment the arc-extinguishing composition of the invention is disposed as a sheath to surround an electrical fuse.

The invention further relates to a method for extinguishing an electrical arc comprising encircling a fuse with a sheath or liner, the sheath or liner comprising an arc extinguishing material and positioning the sheath or liner such that if an arc forms within the sheath or liner, the sheath or liner evolves arc-extinguishing gasses, and the arc-extinguishing gases extinguish the arc according to the invention.

The invention further relates to an electrical fuse, whereby the fuse is enclosed in a sheath, whereby the sheath comprises a composition of the invention.

The invention further relates to an electrical switch comprising an arc-extinguishing material arranged in the vicinity of the contacts, whereby the arc-extinguishing material comprises a composition according to the invention.

The invention further relates to the use of a composition of the invention in the manufacture of an electrical device, preferably an electrical switch or an electrical fuse.

The invention further relates to the use of a composition comprising a metal hydrate, a polymeric binder and a compatible plasticizer for the polymeric binder to extinguish an electrical arc.

In one embodiment, the binder, or at least a portion of the binder, is a polymer that contains a functional group that binds to a coupling agent that is included in the arc-extinguishing composition. The coupling agent, which may be a polymer that is compatible with the binder, contains a functional group that binds to the arc-extinguishing compound to tie the polymeric binder to the arc-extinguishing compound, *e*.*g*., melamine and/or Mg(OH)₂ or other water evolving metal hydrates, to provide new and unexpected physical strength and stability to the composition. In this embodiment, the molded composition, including the arc-interrupting compound coupled to the binder, maintains excellent arc-interrupting capability, that ablates cleanly during an arc, subliming into a gas that has a high dielectric strength and that stops the arc in a reasonable time, as shown in the "opening arc" times of the data provided hereinafter. Once the arc is put out by the gases, including water vapors, sublimed from the arc-extinguishing composition, the residue formed on the remaining solid composition does not reduce the dielectric strength of the composition, as shown in the low, consistent "closing-arc" times shown in the data provided hereinafter. The arc-extinguishing composition must provide all these properties while maintaining chemical stability and electrical insulating properties as well as unexpected physical strength. The compositions described herein, when called upon to do a "fault close" in a high power electrical switch, provide an arcing time that is short, and the composition does not shatter or crack due to the pressure wave created by the fault close, and the switch survives to switch another day.

Arc-quenching metal hydrates that are capable of emitting water vapor by sublimation when in contact with an electrical arc, that are useful alone or together with an arc-quenching compound, such as melamine, include: Mg(OH)₂; Borax or disodium tetraborate (Na₂[B₄O₅(OH)₄]·8H₂O); zinc borate (2ZₙO·3B₂O₃·3.5H₂O); aluminum hydroxide (Al(OH)₃) or Al₂O₃·3H₂O; and aluminum trihydrate (CAS #21645-51-2); and the di, tri, and pentahydrate salts of magnesium carbonate MgCO₃·2H₂O; MgCO₃·3H₂O; and MgCO₃·5H₂O, respectively; artinite (MgCO_{3·}Mg(OH)₂·3H₂O); hydromagnestite (4MgCO₃·Mg(OH)₂ ·4H₂O); and dipingite (4MgCO₃·Mg(OH)₂·5H₂O).

In other embodiments of the arc-extinguishing compositions and articles described herein, the melamine or other arc-extinguishing compound provides unexpectedly better results when incorporated into the composition in finely divided form together with a metal hydrate; and improved results are provided by combining a plasticizer for the polymeric binder.

Further three embodiments of the arc-quenching materials and articles are described hereinafter - each embodiment providing improved mechanical properties and/or arc-extinguishing results either alone or in combination with the other embodiments. Each of these three individual embodiments can be included alone in the materials and articles described herein or any two or three of these embodiments can be combined to further improve the materials and articles described herein.

In brief, the three embodiments are as follows:
(1) Incorporating an arc-extinguishing metal hydrate into the arc-extinguishing composition that interacts mechanically and/or chemically with a polymeric binder and optionally with a polymeric binder and optionally with a coupling agent to improve the mechanical properties and/or the arc-extinguishing properties of the composition and articles described herein.
(2) Incorporating the composition into single use "smu type" fuses, using the arc-extinguishing hydrate in place of the boric acid of the prior art; and
(3) Incorporating a second, particulate arc-quenching material into the arc-extinguishing composition. Preferably, the second arc-quenching material is a particulate or granular material of any desired particle size and is selected from the group consisting of melamine, guanidine, guanidine acetate, guanidine carbonate, 1,3-diphenylguanidine, cyanurates, melamine cyanurates, hydantoin, allantoin, urea, urea phosphate, benzoguanamine, dithioammelide, ammeline, and a cyanuric halide, and/or derivatives and/or mixtures thereof. In accordance another embodiment, the second arc-quenching material has a particle size distribution such that at least 90% by weight of the particles have a particle size less than about 200 µm, preferably less than about 150 µm, more preferably less than about 100 µm, and most preferably less that about 50 µm. To achieve the full advantage of this embodiment, preferably at least 95% by weight of the arc-quenching particles have a particle size less than about 50 µm.

The arc-extinguishing compositions described herein are suitable for deionizing and extinguishing a high-voltage electrical arc. The compositions include effective amounts of an arc-extinguishing water vapor-emitting material, such as magnesium hydroxide, with or without melamine, and sufficient binding polymer to achieve the desired combination of arc-extinguishing properties and structural characteristics, such as tensile strength, elongation, environmental resistance to thermal cycling, and the like. Additionally, the composition for various applications and uses may include additives, fillers or fibrous materials.

The metal hydrates useful in the compositions and methods described herein are those that emit water when contacted with an electrical arc, particularly those that emit water at temperatures above 205°C (400°F), preferably above 260°C (500°F), and most preferably at 315°C (600°F) or higher. The preferred metal hydrates are magnesium hydroxide (Mg(OH)₂), Zinc borate (2ZnO·3B₂O_{3.}·3.5H₂O); aluminum hydroxide (Al(OH)₃) or Al₂O₃·3H₂O; aluminum trihydrate (CAS #21645-51-2); the di, tri, and pentahydrate salts of magnesium carbonate MgCO₃·2H₂O; MgCO₃·3H₂O; and MgCO₃·5H₂O, respectively; artinite (MgCO₃·Mg(OH)₂·3H₂O); hydromagnestite (4MgCO₃-Mg(OH)₂ ·4H₂O); and dipingite (4MgCO₃·Mg(OH)₂·5H₂O)

The arc-extinguishing composition is homogenized by compounding the constituents using dry blending, roll mill, extrusion and/or other plastic compounding techniques to obtain the molding resin compositions. The molding resin then is molded into articles of the desired shape using plastic processing techniques, such as injection molding, extrusion, and the like. In a preferred composition, for example, to form a trailer for an interrupter, a nylon base polymer binder is combined with melamine and an anhydride-functional coupling agent to achieve the desired arc-extinguishing and mechanical characteristics by virtue of the bonding and/or miscibility between the melamine, nylon, and the anhydride-functional coupling agent.

In other embodiments, as outlined above, the composition includes one or more metal hydrates; base polymeric binder(s) with or without a coupling agent; and may contain a finely divided arc-quenching material and/or a plasticizer for the base polymeric binder(s).

Accordingly, one aspect of the compositions, articles and methods described herein is to provide a new and improved arc-quenching composition comprising effective proportions of an arc-quenching metal hydrate, with or without a second arc-quenching compound, such as melamine, and a polymeric binder containing coupling agent-interactive moieties, such as an ethylene maleic anhydride polymer, and a suitable coupling agent capable of chemically and/or mechanically attaching the arc-extinguishing compound to the coupling agent and coupling the arc-extinguishing compound to the polymeric binder to achieve improved strength and desirable environmental resistance to thermal cycling.

Another aspect of the compositions, articles, and methods described herein is to provide a new and improved arc-extinguishing composition with improved mechanical characteristics, when molded, while exhibiting at least the same desirable electrical arc-extinguishing characteristics of previously available arc-extinguishing compositions and articles.

Another aspect of the compositions, articles and methods described herein, is to provide a new and improved arc-extinguishing composition including an arc-interrupting compound and a polymeric binder wherein the binder is a polymer, or copolymer formed from two different monomers, including coupling agent reactive groups or moieties for coupling the binder to the arc-interrupting compound through a coupling agent.

Another aspect of the compositions, articles and methods described herein, is to provide a new and improved arc-extinguishing composition including an arc-extinguishing compound having at least one site reactive with a coupling agent-contained functional group; or a polymeric binder material including a plurality of reactive coupling agent contained functional moieties, such that when the composition is molded under heat and pressure, the arc-extinguishing compound and the polymeric binder will chemically bond (including ionic and/or covalent bonds) to the coupling agent to provide new and unexpected physical strength in the molded composition.

Still another aspect of the compositions, articles and methods described herein, is to provide a new and improved arc-interrupting composition including an arc-interrupting compound having at least one reactive amine site in its molecule, such as melamine, and a thermoplastic resin binder material containing an amine-reactive site and a binder-reactive site; together with a suitable coupling agent for coupling the arc-interrupting compound to the polymeric binder through the coupling agent.

Another aspect of the compositions, articles and methods described herein, is to provide a new and improved arc-interrupting composition that provides sufficient and excellent arc-interrupting characteristics as well as new and unexpected molding and physical strength properties such as tensile strength, elongation and ability to withstand thermal cycling and resist cracking.

The above and other aspects and advantages of the present invention will become apparent from the following detailed description of the preferred embodiments, taken in conjunction with the drawings.

Fig. 1 is a graph showing the closing prestrike times for arc-extinguishing test sample compositions.

Fig. 2 is a perspective view of a fuse sleeve or liner formed from the arc-extinguishing compositions described herein;

Fig. 3 is a partially broken-away side view showing the sleeve or liner of Fig. 1 surrounding a fuse; and

Fig. 4 is a perspective view of a high voltage switch (gang switch) having the arc-extinguishing material described herein disposed to surround the electrical contacts and engage an electrical arc repeatedly upon opening and closing of the switch.

In accordance with one embodiment of the compositions, articles, and methods described herein, it has been found that the physical and thermal properties of an arc-extinguishing composition can be unexpectedly improved when the arc-extinguishing composition includes a metal hydrate, optionally included with a reactive coupling agent; and a binder that optionally contains a coupling agent-reactive functional group, such as an anhydride group so that the binder and the metal hydrate optionally are bound together through the coupling agent. These binders are effective with the metal hydrate as the only arc-quenching compound, but are particularly effective when used with both the metal hydrate and a second arc-quenching compound that has an available reactive site, such as an amine group; a compound containing one or more available hydroxyl groups, epoxy groups and/or aziridine groups; or compounds containing one or more available thiol groups having available carboxylic acid-reactive sulphur atoms, but are also effective with other arc-quenching compounds used together with the metal hydrate. The polymeric binders having one or more coupling agent-reactive functional groups, and the reactive coupling agents, described herein have been found to be particularly effective with melamine or other similar arc-quenching compounds, such as benzoguanamine, dithioammelide, ammeline, and a cyanuric halide, used together with a metal hydrate.

In the coupling agent embodiment described herein, the functionalized, coupling agent-reactive polymeric binder need not form 100% of the binder material used in the arc-extinguishing compositions and excellent results have been found in improvement of known arc-extinguishing compositions when the functionalized binder is included in only a small portion, *e*.*g*., 0.5 to 20% by weight, of the binder material used. The non-reacted (non-functional) portion of the coupling agent and polymeric binder should be sufficiently compatible such that the composition, when melted, forms a homogenous composition.

Suitable polymeric binders having one or more coupling agent-reactive functional groups include thermoplastic and thermosetting polymers having one or more functional groups selected from anhydride, carbonyl, hydroxyl, carboxyl, amine, amide, ether, lactam, lactone, epoxy, ester, sulfate, sulfonate, sulfinate, sulfamate, phosphate, phosphonate, and/or phosphinate; or an aromatic ring capable of covalently or ionically bonding to the coupling agent. Preferably, the binder has a functional group selected from anhydride, carbonyl, carboxyl, hydroxyl, amine, amide (particularly any nylon), ether, and/or an aromatic ring having a reactive group as part of the ring structure or as an extending coupling agent-reactive functional group. Examples of suitable polymeric binders containing these coupling agent-reactive functional groups include polypropylene, nylon 4/6, nylon 6/6, nylon 6, nylon 11, nylon 6/12, high-impact nylon, mineral-filled nylon, polycarbonate, polystyrene, acrylonitrile butadiene styrene, polysulfone, polybutylene terphthalate, polyethylene terphthalate, polyphenylene sulfide, polyester thermoplastic elastomer, polyetherimide, styrenic thermoplastic elastomer, olefinic thermoplastic elastomer, polyurethane thermoplastic, polyphenylene oxide, polyetheretherketone, phenylene ether co-polymer, polycarbonate/acrylonitrile butadiene styrene, polyarylether ketone, polyetherketoneetherketoneketone, polyphthalamide, and polyetherketoneketone and blends of any two or more of these polymers. Other suitable base resins include perfluoroalkoxy, ethylene tetrafluoroethylene, and polyvinylidene fluoride.

The functionalized binders used in the coupling agent embodiment of the arc-interrupting compositions can be used in a widely varying amount, as well known in the art, together with the arc-interrupting or arc-extinguishing compound, such as magnesium hydroxide, and can be a combination of a number of different thermosetting and/or thermoplastic binder materials well known in the art. The functionalized binders are usually included in amounts of at least about 10% by weight of the total arc-interrupting composition and preferably in an amount of at least about 20% by weight of the arc-interrupting composition. The best results for purposes of molding, physical and chemical stability and strength, arc-interrupting characteristics and insulation properties are achieved when the total amount of functionalized binders are in the range of about 15% to about 50% by weight of the arc-interrupting composition, preferably in the range of about 20% to about 40%, based on the total weight of the finished molded arc-interrupting composition and article.

The coupling agents used in the coupling agent embodiment to tie the arc-extinguishing compound to the functionalized polymeric binder preferably is a monomeric or polymeric compound that contains reactive functional groups that provide covalent bonds to both the arc-extinguishing compound and the polymeric binder. However, the attractive interaction between the coupling agent and/or the arc-extinguishing compound and/or the polymeric binder also can be by any mechanism selected from the group consisting of electrostatic complexing, ionic complexing, chelation, hydrogen bonding, ion-dipole, dipole/dipole, Van Der Waals forces, and any combination thereof. The preferred coupling agent is a polymer, *e*.*g*., terpolymer, that has an anhydride functionality. For example, an ethylene /ethyl acrylate/maleic anhydride terpolymer coupling agent, *e*.*g*., Lotader 4720 from Atofina Chemicals Corporation, can react with a nitrogen atom of the melamine and a nitrogen atom of a nylon binder to couple the melamine to the nylon binder, *e*.*g*., nylon 6. The non-functional portion of the Lotadur coupling agent is compatible with the nylon, *e*.*g*., nylon 6 polymeric binder. Other examples of suitable coupling agents include organosilanes, organofunctional silylating agents, particularly the organosilanes having an amino, epoxy, acrylate, n-mercapto and/or vinyl functionality including (3-Acryloxypropyl)trimethoxysilane; N-(2-Aminoethyl)-3-aminopropyltrimethoxysilane; 3-Aminopropyltriethoxysilane; 3-Aminopropyltrimethoxylsilane; 3-Isocyanatoproplytriethoxysilane; (3-Glycidoxypropyl)trimethoxysilane; 3-Mercaptopropyltrimethoxysilane; 3-Methacryloxypropyltrimethoxysilane; and Vinyltrimethoxysilane.

The preferred coupling agents are functionalized polyolefins, *e*.*g*., polyethylene or polypropylene that is functionalized with one or more reactive functionalities that provide reactivity or electrostatic association with the arc-extinguishing material and with the polymeric binder. The coupling agent preferably includes glycidylmethacrylate (GMA) and/or maleic anhydride (MAH) functional groups for better compatibility with polyester, polyamide and/or polyolefin polymeric binders. The most preferred coupling agents are functionalized polyolefins, particularly terpolymers of ethylene or propylene (PE or PP) with ethylacrylate (EA) and maleic anhydride (MAH) or glycidylmethacrylate having 6.5-30 wt. % EA; 0.3-3.1 wt. % MAH or GMA with the remaining 66.9 wt. % to 93.2 wt. % being PE or PP, preferably polyethylene. The terpolymer containing MAH is sold under the trade name Lotader, from Atofina Chemicals. Other suitable coupling agents include terpolymers of PE or PP with MAH and n-butyl acrylate (Lotader grades 2210, 3210, 4210 and 3410); MAH grafted ethylene/butane copolymers (elastomers), having about 0.25 wt. % to 1 wt. % MAH, sold by Dow Plastics, as AMPLIFY GR 208 functional polymers; titanate quarternary ammonium compounds, such as those sold by KENRICH petrochemicals as KEN-REACT^{®} Water Soluble Chelate Titanate Quats and KEN-REACT^{®} LICA^{®}; KEN-REACT^{®} NZ^{®} Neoalkoxy Zinconates and Quats; KEN-REACT^{®} KZ^{®} Cycloheteroatom Zinconates; KEN-REACT^{®} KA Reluminates; CAPOW^{®} KR^{®} and L^{®} Series Titanate Coupling Agent Powders; styrene/maleic anhydride copolymers; epoxy modified polyolefins, particularly terpolymers of ethylene/methyl acrylate/ glycidylmethacrylate (E-MA-GMA) or copolymers of ethylene and glycidylmethacrylate (E-GMA) having a GMA content of 3-8 wt. % and a methyl acrylate (MA) content of 0 or about 24-25% sold by Atofina Chemicals as Lotader AX8840; Lotader AX 8900 and Lotader AX8930; copolymers of ethylene and/or propylene with methacrylic acid (E/MAA) or (P/MAA), wherein the MAA acid groups have been partially neutralized, *e*.*g*., with metal, *e*.*g*., lithium, sodium or zinc, ions (DuPont SURLYN^{®} 9320W); any Maleic Anhydride grafted polyolefin; any styrene/acrylonitrile grafted polyolefin; polypropylene/polymethylmethacrylate graft copolymers sold by Crompton Corporation as INTERLOY™ W1095H1; or the like.

The arc-quenching compound optionally included together with the metal hydrate in the compositions described herein, such as melamine, is included in the compositions in the normal amounts, well-known in the art, and generally in amounts of about 5% to about 90% by total weight of the arc-interrupting composition, preferably about 10% to about 70%, more preferably about 20% to about 50%, based on the total weight of the composition. Excellent results are achieved with arc-interrupting compounds and binder materials present in proportions ranging from about four parts by weight of arc-interrupting compound to one part by weight of polymeric binder material by weight to about one part by weight of arc-interrupting compound to one part by weight of polymeric binder material. Best results are achieved when the arc-interrupting compound is included in the composition in an amount of two to three parts by weight of arc-interrupting compound per part by weight of polymeric binder material.

Of the total polymeric binder(s) included in the arc-interrupting composition, the functional group-containing polymers or copolymers should be included in an amount sufficient to improve the tensile strength of the molded composition, preferably more than a 10% increase in tensile strength, as a result of the addition of the functional group-containing binder.

For example, a typical prior art arc-interrupting composition includes melamine in a polyethylene binder in proportions of three parts by weight of melamine to one part by weight of polyethylene binder and has a tensile strength of 7.8 N/mm² (1133 psi). By replacing only 5% of the polyethylene with a coupling agent-interacting functionalized polymeric binder, such as ethylene/maleic anhydride, together with a suitable coupling agent for both the functionalized polymer and the melamine, the tensile strength is increased more than 10%. By totally eliminating the polyethylene and substituting 100% ethylene/maleic anhydride as the binder material for melamine, the tensile strength is increased to 11.5 N/mm² (1677 psi), or almost 50%. Physical strength improvements are achieved with the inclusion of the functional group-containing binder materials, and a coupling agent reactive therewith, in binder amounts as low as about 0.5% based on the total weight of binders present in the composition up to 100% replacement of the binder material with the functional group-containing binder(s).

To achieve the full advantage, the binder material used with the arc-interrupting compound should include the functional group-containing polymers or copolymers described herein in amounts of about 2% by weight to about 100% by weight preferably about 50% to about 100% by weight, based on the total weight of polymeric binders contained in the composition. The remaining percentage of binder material can be any binder effective for moldability and arc-extinguishing characteristics, such as the polyolefins, e.g. polyethylene and/or polypropylene; polyfluorinated resins, such as polytetrafluoroethylene, acrylic resins, polyamides, such as any nylon, and any other suitable binders, including thermosetting resins, such as epoxy resins, polyester resins, phenolic resins, and the like. Various elastomeric materials also may be included to improve the elongation properties of the molded compositions, such as butyl-based and/or isoprene-based and/or neoprene-based synthetic elastomers.

The metal hydrate and binder compositions described herein are useful with or without any of the known arc-quenching compound(s) to provide an arc-extinguishing composition that is readily moldable into a desired shape while exhibiting structural properties, thermal stability, and environmental resistance to thermal cycling heretofore impossible with known arc-quenching compositions. Very unexpected structural (mechanical) property improvements are achieved when the arc-interrupting compound is a material that includes one or more reactive sites that are chemically reactive with one or more reactive moieties of a coupling agent, which is also chemically reactive with the functional binders described herein. For example, melamine (C₆N₆H₆) includes three equally spaced reactive primary amine moieties that can chemically bond (including ionic and/or covalent bonds) with the extending functional moieties of a vinyl/maleic anhydride binder, wherein the anhydride group acts as a coupling agent for the melamine, thereby achieving new and unexpected tensile strength, elongation and resistance to thermal cycling, while maintaining excellent arc-extinguishing properties.

In the preferred embodiment, the percentage of functional group-containing monomer used in forming a functionalized binder polymer or copolymer, such as in the copolymerization of ethylene with maleic anhydride, and the like, can be varied widely to provide sufficient reactive, *e*.*g*., anhydride moieties, in the copolymer for chemical bonding (including ionic and/or covalent bonds) at one, two or all three of the reactive amine sites extending from the melamine vinyl structure. In this manner, different degrees of compound-binder chemical bonding can be provided for different properties when the functional group-containing polymers are used as at least a portion of the binder in the manufacture of arc-quenching compositions.

The amount of functional group-containing monomer that should be polymerized, or copolymerized with a second monomer in forming copolymers, is from about 0.5 percent to about 80%, based on the total weight of the polymerizable monomers, with the second monomer present in an amount of about 20% by weight to about 95% by weight based on the total weight of both monomers. Such copolymers are readily available, such as the ethylene/maleic anhydride copolymers manufactured by Atofina containing various amounts of maleic anhydride monomer. The copolymer coupling agent sold by Atofina under the Trademark LODATER 4720, provides an arc-quenching composition having exceptionally good structural characteristics, thermal stability and environmental resistance to thermal cycling. Other functionalized polymers and copolymers can be used having more or less coupling agent-reactive moieties, *e*.*g*., an anhydride percentage, and should provide similar structural improvements when used as a coupled binder in arc-quenching compositions.

It is theorized that a reactive site on the arc-quenching compound chemically bonds (ionically and/or covalently) with the functional moiety of the polymeric binder to achieve new and unexpected tensile strength, elongation and resistance to cracking heretofore unachieved in the prior art. In addition to the reactive amine groups extending from melamine arc-quenching compounds, other arc-quenching compounds also include reactive sites, such as benzoguanamine having a pair of extending reactive amine groups; thio substituted organic arc-quenching compounds, such as dithioammelide; ammeline; and halogenated compounds such as cyanuric chloride. Each of these compounds has the ability to generate large volumes of arc-extinguishing gases under the influence of an electric arc. Each of these compounds is useful in accordance with compositions, materials, and articles described herein, in combination with the coupling agent-reactive binders; and/or finely divided form of the arc-extinguishing compounds; and /or the plasticizers for the polymeric binders, to achieve new and unexpected structural, mechanical and physical properties in an arc-extinguishing or arc-interrupting composition.

It is theorized that a reactive, arc-quenching compound, such as melamine, undergoes chemical bonds (ionic and/or covalent bonding) with the functionalized polymeric binders described herein by reacting with the reactive functional group at one or more of the reactive compound sites.

Similarly, any arc-quenching compounds that have reactive epoxy groups, aziridine groups, thiol groups, hydroxyl groups, halogen groups, and like -reactive sites, also can chemically bond (including ionic and/or covalent bonds) with the reactive functional groups from the polymeric binders used in the compositions described herein to provide new and unexpected structural properties, thermal stability, and thermal cycling resistance.

The molecular weights of the reactive, functionalized polymeric binders vary widely and can range from a low of about 250 weight average molecular weight to a high of about 500,000 or more while achieving exceptionally good physical properties, thermal stability and resistance to thermal cycling in accordance with the compositions, articles, and methods described herein. It is preferred that the weight average molecular weight of the polymeric binders be in the range of about 1,000 to about 100,000 weight average molecular weight, and more preferably in the range of about 1,000 to about 50,000 weight average molecular weight.

Other materials may be added to the compositions and articles described herein for additional insulating, strength, and/or arc-extinguishing properties, generally in amounts of about 0.1% to about 10% each, based on the total weight of the composition. Fibrous additives include glass, inorganic fibers and organic fibers, such as polyacrylonitrile, polyamide and polyester fibers. Fillers that may be included are, for example, cellulosic materials, calcium carbonate, metal oxides, comminuted polymers, carbon black, and natural and synthetic silica materials.

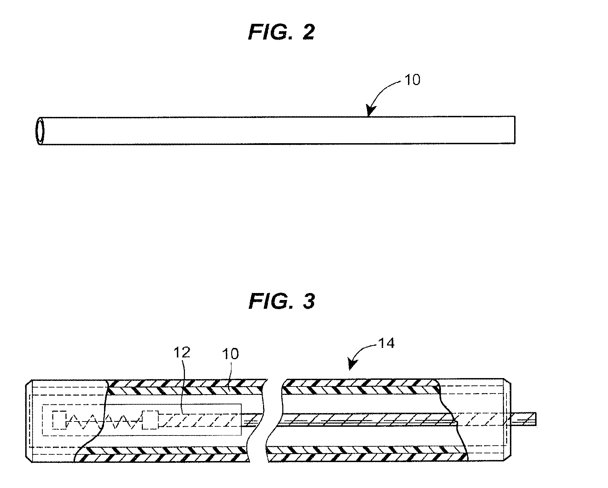

Figure 2 shows one example of a specific use of the arc-extinguishing materials in the form of molded or extruded annular fuse sheath or liner 10, manufactured (molded or extruded) from the arc-extinguishing compositions described herein, that is dimensioned to surround a fuse 12 disposed within a fuse tube 14. Such fuses 12 may be provided to interrupt both low and high level fault currents. At low fault currents, if the sheath 10 does not burst or rupture and remains integral, the arc between terminals is elongated entirely within the fuse tube 14. The elongating arc interacts with the arc-extinguishing material of the sheath 10, evolving arc-extinguishing gases. If sufficient arc-extinguishing gas is evolved from the sheath and if the pressure of this gas within the sheath remains sufficiently high at a current zero, there will be sufficient dielectric strength due to the presence of the arc-extinguishing gas to prevent reignition of the arc. The fuse 12 may also be called upon to interrupt high fault currents. At high fault currents the sheath usually ruptures and the extinguishment of the arc formed and elongated between terminals of the fuse is primarily due to the evolution of the arc-extinguishing gas from the bore of the fuse tube 14.

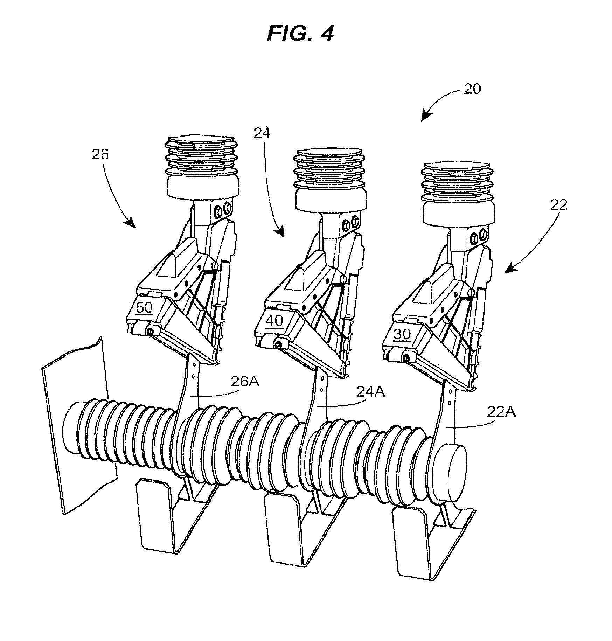

Fig. 4 shows a three phase, 25 KV air insulated "gang" switch, generally designated by reference number 20, that includes three adjacent phases 22, 24 and 26, that open and close together. Each phase 22, 24 and 26 has connectable and separable electrical contacts 22A, 24A and 26A, respectively, that are covered with, or surrounded by, the molded, arc-extinguishing compositions described herein 30, 40, and 50, respectively. When the electrical contacts 22A, 24A and 26A of the phases 22, 24 and 26 of the three phase switch 20 open from a closed position, and when they are closed from an open position, a high voltage arc develops across the electrical contacts and the arc is extinguished by the molded arc-extinguishing compositions 30, 40 and 50. The molded compositions 30, 40 and 50 effectively extinguish the electrical arcs and remain structurally stable to perform repeatedly over a period of years.

### Examples

Sample 10.1 composition containing metal hydrate Mg(OH)₂:
45 wt. % Nylon 6 (chem polymer 253 H) or Chemlon® 253 H
35 wt. % Mg(OH)₂ (1-3% aminosilane surface treatment; 97-99% Mg(OH)₂)
20 wt. % coupling agent: terpolymer of Ethylene/Ethyl Acrylate/Maleic Anhydride (Lotader® 4700)
.15 wt. % Antioxidant (Ciba Irgonox B-1171) (CAS#/Chemical Name: 23128-74-7 & 31570-04-4/N,N'-hexane-1,6-diylbis(3-(3,5-di-tert-butyl-4-hydroxyphenylpropionamide)) & Tris (2,4-di-(tert) - butylphenyl) Phosphite

Sample 6.22 and 6.23: Identical to Sample 10.1 except containing 35 wt.% melamine in place of the Mg(OH)₂.

### Test ProceduresLoad Break Testing:

Load break testing was done per IEEE 1247-98. The target of load switching was 29 kV (system), 600 A, TRV 8.5 kV at 294 µs. Testing was also done at 400 A. The tests consisted of a set of 10 Close-Open operations, separated by a 3-5 min. rest period to record data. The contact angle was advanced 36° with every operation. This made a consistent test for the materials of the arc compressor.

### Fault Closing:

Fault closing was also done per IEEE 1247-98. The targets of fault closing operations were 65 kA peak and 32.3 kA peak, with a duration of 0.200 s. After each fault close, the sample was examined for operability. The first shot of a fault close sequence was timed to get contact part on one phase at a current zero. Should the sample pass, further shots advanced the closing angle 120°.

### Swamp Screening Test:

Samples were weighed, then placed into two beakers, one 10% Nitric acid by volume, the other deionized water. Samples were placed so the sample partially stuck out of the liquid. Samples are then re-weighed after 7 days, and the effect due to acid calculated. Samples of Delrin, 6.23, and 10.1 were tested.

### Results:

### Load Break Testing:

The performance of the samples in Load Break testing is summarized below. Test voltage was 30.4 kV average:

### OPENING ARC TIMES

| **Average Open Arc Times, ms** | | | | | | | |
|---|---|---|---|---|---|---|---|
| **Sample #, Material** | **Current , A** | **# of Ops** | **# of Ops >24 ms** | **Phase R** | **Phase S** | **Phase T** | **Remarks** |
| 1(6.23) | 628 | 10 | 1 | 16.2 | 15.4 | 17.0 | 1 op >24ms |
| 2 (6.23) | 625 | 6 | 0 | 17.2 | 15.4 | 16.9 | dnc 7^{th} open |
| 3 (10.1) | 629 | 10 | 0 | 17.9 | 19.2 | 17.6 | Pass |
| 4(6.23) | (dnt) | | | | | | |
| | | | | | | | |
| 5 (10.1) | 626 | 10 | 0 | 18.8 | 18.4 | 18.8 | Pass |
| 6 (6.23, 10.1 slat) | 605 | 10 | 1 | 17.4 | 17.7 | 16.7 | 1 op >24ms |
| 7(6.23) | 404 | 9 | 1 | 17.4 | 19 | 16.7 | dnc 10^{th} open |
| 8 (6.22) | 404 | 10 | 0 | 17.2 | 17.8 | 18.3 | Pass |

| | | | | | | | |
|---|---|---|---|---|---|---|---|
| Dnt - did not test dnc - did not clear | | | | | | | |

### CLOSING ARC TIMES

| **Average Closing Arc Times, ms** | | | | | | | |
|---|---|---|---|---|---|---|---|
| **Sample #, Material** | **Current , A** | **# of Ops** | **Phase R** | **Phase S** | **Phase T** | **Long Prestike Time, ms** | **Remarks** |
| 1(6.23) | 628 | 10 | 5.3 | 5.8 | 5.9 | 17 | |
| 2 (6.23) | 625 | 6 | 6.2 | 5.2 | 6.4 | 11.2 | |
| 3 (10.1) | 629 | 10 | 3.1 | 3.2 | 3.1 | 4.8 | |
| 4(6.23) | (dnt) | | | | | | |
| | | | | | | | |
| 5 (10.1) | 626 | 10 | 2.6 | 2.8 | 2.6 | 3.5 | |
| 6 (6.23, 10.1 slat) | 605 | 10 | 8.5 | 8.5 | 6.7 | 12.9 | |
| 7(6.23) | 404 | 9 | 4.3 | 5.5 | 5.6 | 8.9 | |
| 8(6.22) | 404 | 10 | 4.8 | 5.5 | 5.7 | 7.8 | |

In comparing samples 1 and 2 (6.23 compressor plates) with samples 3 and 5 (composition 10.1 compressor plates) in opening, the composition 10.1 material on average has slightly longer open arc times. However, it is more consistent, and never had the long arc time that may drag the arc out of the compressor and potentially cause a flash over.

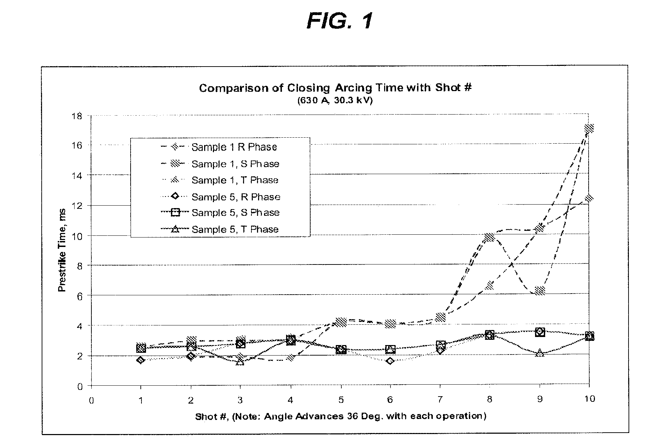

There is a great deal of difference in closing prestrike times, as shown in Fig. 1. The 10.1 material (sample 5) has average times in the 3 millisecond (ms) range that stay relatively constant, while the composition 6.23 material (sample 1) also seems to have prestrike times that continually increase.

The effect of using a composition 10.1 slat instead of Delrin in a composition 6.23 compressor can be seen by comparing samples 1 and 6 of Fig. 1. While sample 6 made 10 Close-Open (C-O) operations, one opening was still above 24 ms. In addition, there is no observable improvement in prestrike times. So, the composition 10.1 slat in composition 6.23 compressors showed no particular advantage.

The effect of using Nylon 6 versus Nylon 6,6 can be seen by comparing samples 7 and 8. Sample 8 (Nylon 6) did make 10 C-O operations without an operation above 24 ms. However, average times do not look much different, and prestrike times look identical.

It should be noted that the alumina balls from Sample 8 (Nylon 6) are much cleaner than those from Sample 7 (Nylon 6,6). However, this is the reverse of the conclusion from single phase testing.

### Fault Closing Testing:

### Fault Closing at 65kA peak, 29 kV, 0.200 Second Duration:

Sample 4 consisted of a new composition 6.23 arc compressor with Delrin slat, and was in new condition. The sample performed well. Prestrike times were 2.5, 2.5, and 1.0 ms. A second shot was taken at the same circuit which left the switch in an inoperable condition.

Sample 3 had a composition 10.1 compressor sides with a Delrin slat, and was conditioned by 10 C-O operations at 30 kV, 625 A. For this sample, the result was that the blades did not make it all the way into the contacts. The blade hit the front face of one contact. The blades welded, and could not be opened. The long front plastic bolt sheared, and the top covers and the composition 10.1 side plates had some cracks present.

### Fault Closing at 32.3 kA peak, 29 kV, 0.200 S Duration:

Sample 6 (composition 6.23 compressor with a composition 10.1 slat) was conditioned by 10 C-O at 30 kV, 600 A prior to fault closing. After fault closing on this circuit, the switch was left in an inoperable condition.

Sample 5 (composition 10.1 material) was conditioned by 10 C-O at 30 kV, 600 A prior to fault closing. We were then able to take three fault closing operations on this sample, leaving it in an operable condition. Prestrike times, in ms, were as follows:

| Operation # | Prestrike Phase R,ms | Prestrike Phase S, ms | Prestrike Phase T, ms |
|---|---|---|---|
| 1 | 2.4 | 3.1 | 2.6 |
| 2 | 0.07 | 2.76 | 2.78 |
| 3 | 2.75 | 2.81 | 0.31 |

Since this exceeds the present certification on a production unit, the 10.1 material at least can match if not exceed the performance of the current production units.

### Swamp Screening Tests:

Results of the Swamp screening test is given in the following table:

| **Material** | **Weight Δ - Water, %** | **Weight Δ -Acid/water, %** | **Weight change due to Acid, %** |
|---|---|---|---|
| Delrin | 0 | -19.8 | -19.8 |
| 6.23 | +0.4 | +11.1 | +10.7 |
| 10.1 | +1.0 | +5.1 | +4.1 |

The composition 6.23 and the composition 10.1 suffered some superficial degradation from the exposure. The Delrin suffered a significant loss of material, particularly at the liquid/air interface.

## Claims

1. Arc-extinguishing composition comprising an effective amount of an arc-quenching metal hydrate;
a polymeric binder for the arc-quenching metal hydrate; and
a compatible plasticizer for the polymeric binder.

2. Composition according to claim 1, further comprising a coupling agent that binds the arc-quenching metal hydrate to the polymeric binder.

3. Composition according to claim 1 or 2, wherein the metal hydrate is magnesium hydroxide.

4. Composition according to any one of claims 1-3, wherein the polymeric binder includes a functionality selected from the group consisting of anhydride, hydroxyl, carbonyl, carboxyl, amine, amide, ether, lactam, lactone, epoxy, ester, sulfate, sulfonate, sulfinate, sulfamate, phosphate, phosphonate, phosphinate, and combinations thereof.

5. Composition according to claim 4, wherein the polymeric binder includes a functionality selected from the group consisting of anhydride, carbonyl, carboxyl, hydroxyl, amine, amide, ether, ester, and combinations thereof.

6. Composition according to claim 4 or 5, wherein the binder comprises a polyamide selected from the group consisting of nylon 4/6, nylon 6, nylon 6/6, nylon 11, nylon 6/12, and polyphthalamide.

7. Composition according to any one of claims 1-6, wherein the composition further includes a second arc-quenching compound.

8. Composition according to claim 7, wherein the second arc-quenching compound is selected from the group consisting of melamine, guanidine, guanidine acetate, guanidine carbonate, 1,3 diphenylguanidine, a cyanurate, a melamine cyanurate, hydantoin, allantoin, urea, urea phosphate, benzoguanidine, dithioammelide, ammeline, a cyanuric halide, and combinations thereof.

9. Composition according to claim 8, wherein the second arc-quenching compound is melamine and the melamine has a particle size such that at least 90% by weight of the melamine particles have a size less than 200 µm.

10. Arc-extinguishing composition in accordance with any one of the foregoing claims disposed as a sheath (10) to surround an electrical fuse (12).

11. Method for extinguishing an electrical arc comprising:
encircling a fuse (12) with a sheath (10) or liner, the sheath (10) or liner comprising an arc extinguishing material in accordance with any of claims 1-9.; and
positioning the sheath (10) or liner such that if an arc forms within the sheath (10) or liner, the sheath (10) or liner evolves arc-extinguishing gasses, and the arc-extinguishing gases extinguish the arc.

12. Electrical fuse, whereby the fuse (12) is enclosed in a sheath (10), whereby the sheath (10) comprises a composition according to any one of claims 1-9.

13. Electrical switch comprising an arc-extinguishing material arranged in the vicinity of the contacts (22A, 23A, 24A), whereby the arc-extinguishing material comprises a composition according to any one of claims 1-9.

14. Use of a composition according to any one of claims 1-9 in the manufacture of an electrical device, preferably an electrical switch (20) or an electrical fuse (12).

15. Use of a composition comprising a metal hydrate, a polymeric binder and a compatible plasticizer for the polymeric binder to extinguish an electrical arc.
